# EUROPÄISCHE PATENTSCHRIFT

(11) **EP 3 535 626 B1**
(45) Veröffentlichungstag und Bekanntmachung des Hinweises auf die Patenterteilung: **26.05.2021**
(21) Anmeldenummer: 17790979.3
(22) Anmeldetag: 10.10.2017
(51) Int. Cl.: G05B 19/042, G05B 19/05, G05B 19/418

(54) **BEREITSTELLUNG VON INFORMATIONEN ZU ZUSATZFUNKTIONALITÄTEN VON FELDBUSKOMPONENTEN**
PROVISION OF INFORMATION REGARDING ADDITIONAL FUNCTIONALITIES OF FIELD BUS COMPONENTS
FOURNITURE D'INFORMATIONS RELATIVES À DES FONCTIONNALITÉS SUPPLÉMENTAIRES DE COMPOSANTS DE BUS DE TERRAIN

(30) Priorität: 03.11.2016 DE 102016120972
(43) Veröffentlichungstag der Anmeldung: 11.09.2019
(73) Patentinhaber: Endress+Hauser Process Solutions AG, 4153 Reinach (CH)
(72) Erfinder: SOTRIFFER, Ingomar, 79194 Gundelfingen (DE); MAYER, Michael, 4104 Oberwil (CH); PFLUG, Jan, 4056 Basel (CH)
(74) Vertreter: Andres, Angelika Maria
(86) Internationale Anmeldenummer: PCT/EP2017/075780
(87) Internationale Veröffentlichungsnummer: WO 2018/082872

(56) Entgegenhaltungen:
- WO-A2-2007/121218
- DE-A1-102007 035 158
- US-A1- 2009 049 207
- US-A1- 2009 292 995

## Beschreibung

Die Erfindung betrifft eine Rahmenapplikation für eine Gerätezugriffssoftware. Des Weiteren betrifft die Erfindung ein Verfahren zum Einholen von Informationen zu Zusatzfunktionalitäten von Feldbuskomponenten eines Feldbusnetzwerks oder von deren Treibern sowie ein Verfahren zum Scannen eines Feldbusnetzwerks und zum Einholen von Informationen zu Zusatzfunktionalitäten von Feldbuskomponenten eines Feldbusnetzwerks oder von deren Treibern.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Die Parametrierung, Konfiguration und Zustandsüberwachung der Feldgeräte eines Feldbusnetzwerks erfolgt in der Regel mittels einer auf einem Host installierten Gerätezugriffssoftware. In der Regel umfasst die Gerätezugriffssoftware eine Rahmenapplikation, in die eine Mehrzahl von Treibern eingebunden ist. Mittels der Treiber kann auf die Komponenten des Feldbusnetzwerks zugegriffen werden. Dabei kann der Benutzer über die Benutzeroberflächen der in die Rahmenapplikation eingebundenen Treiber vom Host aus Eingaben tätigen und Parameterwerte setzen oder ändern.

US 2009/292995 A1 beschreibt ein Verfahren einer Kommunikation in einer FDT/DTM Umgebung.

WO 2007/121218 A2 offenbart ein Verfahren sowie eine Benutzerschnittstelle zur Erstellung von benutzerdefinierten Definitionen für Benutzeroberflächen einer Rahmenapplikation.

Es ist Aufgabe der Erfindung, auf Seiten der Rahmenapplikation eine bessere Übersicht über ein Feldbusnetzwerk und dessen Komponenten zu ermöglichen.

Gelöst wird diese Aufgabe durch die in den Ansprüchen 1, 14 und 15 angegebenen Merkmale.

Vorteilhafte Weiterentwicklungen der Erfindung sind in den Unteransprüchen angegeben. Eine Rahmenapplikation für eine Gerätezugriffssoftware entsprechend den Ausführungsformen der Erfindung ist auf einem Host installierbar, wobei in die Rahmenapplikation mindestens ein Treiber einbindbar ist, der für einen Zugriff auf eine zugehörige Feldbuskomponente eines Feldbusnetzwerks ausgelegt ist. Die Rahmenapplikation weist zu jedem eingebundenen Treiber eine Standardschnittstelle auf, über die ein Datenaustausch zwischen dem Treiber und der Rahmenapplikation erfolgen kann. Die Rahmenapplikation weist zu zumindest einigen der eingebundenen Treiber zusätzlich zu der Standardschnittstelle eine oder mehrere proprietäre Schnittstellen auf, über die ein Datenaustausch zwischen dem jeweiligen Treiber und der Rahmenapplikation erfolgen kann, wobei Informationen zu Zusatzfunktionalitäten, die von dem Treiber oder einer zugehörigen Feldbuskomponente unterstützt werden, über zumindest eine der proprietären Schnittstellen von dem Treiber zur Rahmenapplikation übermittelbar sind. Die Rahmenapplikation ist dazu ausgelegt, die Informationen zu Zusatzfunktionalitäten zusammenzuführen.

Bei der Rahmenapplikation sind zwischen der Rahmenapplikation und zumindest einigen der eingebundenen Treiber zusätzlich zur Standardschnittstelle eine oder mehrere proprietäre Schnittstellen vorgesehen. Während über die Standardschnittstelle nur bestimmte Daten übermittelt werden können, können die zusätzlich vorgesehenen proprietären Schnittstellen zur Übermittlung von ergänzenden Informationen verwendet werden. Beispielsweise können über die proprietären Schnittstellen Informationen zu Zusatzfunktionalitäten einer Feldbuskomponente oder von deren Treiber zur Rahmenapplikation übermittelt werden. Dadurch wird ermöglicht, ergänzend zu den Daten, die standardgemäß über die Standardschnittstelle übertragbar sind, Informationen über die auf Seiten der Feldgeräte und Feldbuskomponenten verfügbaren Zusatzfunktionalitäten über die proprietären Schnittstellen zur Rahmenapplikation zu übermitteln und dort zusammenzuführen. Indem zusätzliche Datenübertragungspfade zwischen den Treibern und der Rahmenapplikation bereitgestellt werden, können die bei der Datenübertragung über die Standardschnittstelle auferlegten Beschränkungen überwunden werden. Beispielsweise werden bei einer Standardschnittstelle gemäß dem Standard FDT derartige Beschränkungen oft als einengend empfunden.

Auf Seiten der Rahmenapplikation werden die Informationen zu den von den einzelnen Feldbuskomponenten unterstützten Zusatzfunktionalitäten zu einem Gesamtüberblick über das Feldbusnetzwerk zusammengeführt. Der Benutzer wird über die Möglichkeiten seines Systems informiert und kann insbesondere auch die Möglichkeiten erkennen und beurteilen, die ihm die bislang nicht freigeschalteten Funktionalitäten der Feldbuskomponenten bieten würden. Ein derartiger Gesamtüberblick von unterstützten Zusatzfunktionalitäten wie beispielsweise Gerätefunktionstests, Konnektivität zur Cloud, Ausstattung für bestimmte Sicherheitsstufen, spezielle Datenanalysefunktionen etc. war bisher nicht möglich. Eine derartige Gesamtübersicht über das Feldbusnetzwerk und seine Möglichkeiten ist insbesondere auch für Vertriebsmitarbeiter von Interesse, weil anhand des Gesamtüberblicks passende Vorschläge und Angebote zur Freischaltung nützlicher Zusatzfunktionalitäten erstellt werden können.

Beispielsweise ist das Zusammenführen von Informationen zu Zusatzfunktionalitäten auf Seiten der Rahmenapplikation insbesondere dann von Vorteil, wenn die Rahmenapplikation mit einer Cloud verbindbar ist. Die unterstützten Zusatzfunktionalitäten können zusammen mit anderen Daten in die Cloud hochgeladen werden, so dass von der Cloud aus eine Gesamtübersicht über das System verfügbar ist. Von der Cloud aus kann dann beispielsweise auch eine Freischaltung zusätzlicher Funktionalitäten erfolgen. Dadurch kann die zeitaufwändige Freischaltung von Zusatzfunktionalitäten vor Ort, also am Ort des Feldgeräts, durch eine Freischaltung von der Cloud aus ersetzt werden.

Ein Verfahren entsprechend den Ausführungsformen der Erfindung dient zum Einholen von Informationen zu Zusatzfunktionalitäten von Feldbuskomponenten eines Feldbusnetzwerks oder von deren Treibern von einer Rahmenapplikation aus. Die Rahmenapplikation ist zusammen mit mindestens einem in die Rahmenapplikation eingebundenen Treiber auf einem Host installiert, der in Datenverbindung mit einem Feldbusnetzwerk steht, wobei der mindestens eine Treiber jeweils für einen Zugriff auf eine zugehörige Feldbuskomponente des Feldbusnetzwerks ausgelegt ist. Die Rahmenapplikation weist zu jedem eingebundenen Treiber eine Standardschnittstelle auf, über die ein Datenaustausch zwischen dem Treiber und der Rahmenapplikation erfolgen kann. Das Verfahren umfasst das Anfordern von Informationen zu Zusatzfunktionalitäten einer Feldbuskomponente oder von deren Treiber von der Rahmenapplikation aus. Außerdem umfasst das Verfahren das Übertragen der Informationen zu Zusatzfunktionalitäten der Feldbuskomponente oder von deren Treiber vom Treiber der Feldbuskomponente zur Rahmenapplikation über mindestens eine proprietäre Schnittstelle, welche zusätzlich zur Standardschnittstelle zwischen dem Treiber und der Rahmenapplikation vorgesehen ist.

Ein Verfahren entsprechend den Ausführungsformen der Erfindung dient zum Scannen eines Feldbusnetzwerks und zum Einholen von Informationen zu Zusatzfunktionalitäten von Feldbuskomponenten des Feldbusnetzwerks oder von deren Treibern von einer Rahmenapplikation aus. Die Rahmenapplikation ist zusammen mit mindestens einem in die Rahmenapplikation eingebundenen Treiber auf einem Host installiert, der in Datenverbindung mit einem Feldbusnetzwerk steht, wobei der mindestens eine Treiber jeweils für einen Zugriff auf eine zugehörige Feldbuskomponente des Feldbusnetzwerks ausgelegt ist. Die Rahmenapplikation weist zu jedem eingebundenen Treiber eine Standardschnittstelle auf, über die ein Datenaustausch zwischen dem Treiber und der Rahmenapplikation erfolgen kann. Das Verfahren umfasst das Scannen einer Topologie des Feldbusnetzwerks und Ermitteln von im Feldbusnetzwerk vorhandenen Feldbuskomponenten. Außerdem umfasst das Verfahren für zumindest einige der gefundenen Feldbuskomponenten das Übertragen von Informationen zu Zusatzfunktionalitäten der gefundenen Feldbuskomponente oder von deren Treiber vom Treiber der Feldbuskomponente zur Rahmenapplikation über mindestens eine proprietäre Schnittstelle, welche zusätzlich zur Standardschnittstelle zwischen dem Treiber und der Rahmenapplikation vorgesehen ist.

Nachfolgend ist die Erfindung anhand von in der Zeichnung dargestellten Ausführungsbeispielen näher erläutert. Es zeigen:
Fig. 1 die Struktur eines Feldbusnetzwerks und einer zugehörigen Gerätezugriffssoftware mit darin eingebundenen Treibern;
Fig. 2 einen FDT-Container, der über einen FDT-Standardschnittstelle sowie weitere proprietäre Schnittstellen mit einem zugehörigen DTM kommuniziert;
Fig. 3 eine Gerätezugriffsoftware mit einer Zentralkomponente, die dazu ausgelegt ist, Informationen zu den unterstützten Zusatzfunktionalitäten abzufragen und zusammenzuführen;
Fig. 4 eine Matrixdarstellung der von den verschiedenen Feldgeräten und Feldbuskomponenten unterstützten Zusatzfunktionalitäten; und
Fig. 5 den Ablauf eines von der Rahmenapplikation aus durchgeführten Scans des gesamten Feldbusnetzwerks, bei dem zusätzlich zu den Gerätespezifikationen auch die unterstützen Zusatzfunktionalitäten ermittelt werden.

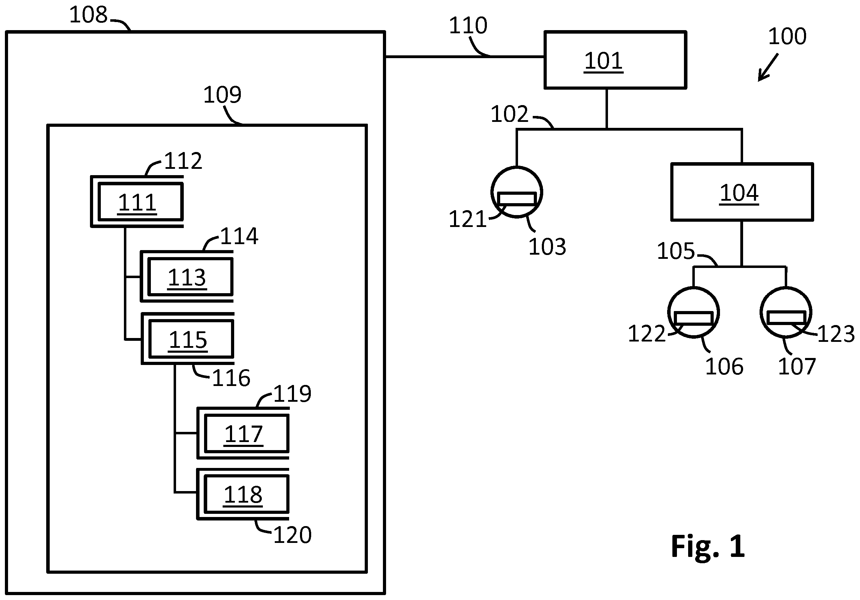

Fig. 1 zeigt ein Feldbusnetzwerk 100, das eine Mehrzahl von Feldgeräten und Gatewaygeräten umfasst. Auf der obersten Hierarchieebene des Feldbusnetzwerks 100 befindet sich ein Feldzugangsgerät 101. Das Feldzugangsgerät 101 ist über ein Profibussegment 102 mit einem Feldgerät 103 und einem Gatewaygerät 104 verbunden. Über das Gatewaygerät 104 ist das Profibussegment 102 mit einem HART-Segment 105 gekoppelt, wobei das Gatewaygerät 104 dazu ausgelegt ist, den Datenverkehr aus dem Protokoll Profibus in das Protokoll HART umzusetzen und umgekehrt. An das HART-Segment 105 sind die beiden HART-Feldgeräte 106 und 107 angeschlossen.

Die Parametrierung, Konfiguration und Zustandsüberwachung der Feldgeräte eines Feldbusnetzwerks erfolgt mittels einer auf einem Host 108 installierten Gerätezugriffssoftware 109. Der Host 108 ist über eine Ethernetverbindung 110 mit dem Feldbusnetzwerk 100 verbunden. Über die Gerätezugriffssoftware 109 kann auf die verschiedeneren Komponenten des Feldbusnetzwerks 100 zugegriffen werden. Insbesondere können von der Gerätezugriffssoftware 109 aus die Parameter der verschiedenen Komponenten des Feldbusnetzwerks 100 ausgelesen, dargestellt, und verändert werden. Darüber hinaus ermöglicht die Gerätezugriffsoftware 109 eine Zustandsüberwachung (Condition Monitoring) der Komponenten des Feldbusnetzwerks 110. Der für diese Aufgaben erforderliche Datenaustausch wird in der Regel über den sogenannten azyklischen Datenverkehr abgewickelt.

Um die verschiedenen Komponenten des Feldbusnetzwerks 100 korrekt ansprechen zu können, benötigt die Gerätezugriffssoftware 109 Informationen über die Eigenschaften und Parameter der Feldgeräte, Gateways, Remote I/Os etc. des Feldbusnetzwerks 100. Diese Informationen werden von den Herstellern der unterschiedlichen Geräte in der Regel in Form von Gerätebeschreibungsdateien oder Gerätetreibern zur Verfügung gestellt. Zur Gerätebeschreibung für den azyklischen Datenaustausch werden bei den Feldbusprotokollen Profibus-DP, Profibus-PA, Fieldbus Foundation und HART Gerätebeschreibungen gemäß den Standards DTM (Device Type Manager), DD (Device Description), EDD (Enhanced Device Description) sowie FDI Device Packages verwendet. Insbesondere bei den Standards EDD und DTM werden zusätzlich zu Geräteparametern, Gerätefunktionalität und Adressraumbelegung auch Grafikfeatures und grafische Benutzeroberflächen spezifiziert, die die Parametrierung und Konfigurierung des jeweiligen Feldgeräts erleichtern sollen. Zur Erzeugung dieser grafischen Oberflächen sind im Standard EDD spezielle Grafikbefehle vorgesehen, die nach Art einer Interpreter-Sprache abgearbeitet werden.

Im Standard FDT/DTM werden die DTMs (Device Type Manager) in Form von dynamisch ladbaren Bibliotheken (DLLs) oder in Form von ausführbaren Dateien (Executables) zur Verfügung gestellt. Ein DTM umfasst auch die genannten Grafikfeatures. Die verschiedenen DTMs zu den verschiedenen Komponenten des Feldbusnetzwerks werden in eine gemeinsame FDT-Rahmenapplikation eingebunden, wobei FDT für "Field Device Tool" steht. Dadurch wird eine gemeinsame Rahmenapplikation zur Verfügung gestellt, in die die DTMs zu verschiedenen Geräten und von unterschiedlichen Herstellern eingebunden werden können.

Der FDT-Standard wird in den nächsten Jahren zunehmend durch den Standard FDI Device Packages ergänzt und später eventuell ersetzt.

Neben den bisher diskutierten Feldbusprotokollen Profibus, Fieldbus Foundation und HART gewinnen die sogenannten Industrial Ethernet-Protokolle an Bedeutung, zu denen u.a. die Feldbusprotokolle EtherNet/IP, ProfiNet und EtherCAT gehören. Beim Feldbusprotokoll EtherNet/IP ist eine Gerätebeschreibungsdatei entsprechend dem Standard EDS (Electronic Data Sheet) zur Beschreibung sowohl des zyklischen als auch des azyklischen Datenaustauschs vorgesehen.

Im Beispiel von Fig. 1 umfasst die Gerätezugriffssoftware 109 eine Rahmenapplikation, vorzugsweise eine Rahmenapplikation des Standards FDT (Field Device Tool), wobei in die Rahmenapplikation unterschiedliche Treiber für die verschiedenen Geräte und Komponenten des Feldbusnetzwerks 100 eingebunden werden können. In eine FDT-Rahmenapplikation können beispielsweise unterschiedliche Device Type Manager (DTMs) von unterschiedlichen Herstellern eingebunden werden. Neben DTMs können auch anderer Gerätebeschreibungsdateien in die Rahmenapplikation eingebunden werden. Dabei wird die hierarchische Struktur des Feldnetzwerks 100 innerhalb der Gerätezugriffssoftware 109 mithilfe von Treibern beziehungsweise Gerätebeschreibungsdateien nachgebildet, wobei die Anordnung der Treiber beziehungsweise Gerätebeschreibungsdateien dabei spiegelbildlich der Struktur des Feldbusnetzwerks 100 entspricht. Für den Zugriff auf die Komponenten des Feldbusnetzwerks 100 können in eine FDT-Rahmenapplikation beispielsweise eine Anzahl von unterschiedlichen Geräte-DTMs, Gateway-DTMs und Kommunikations-DTMs eingebunden werden, wobei auf Seiten der FDT-Rahmenapplikation zu jedem Knoten des Feldbusnetzwerks 100 ein FDT-Geräteagent vorgesehen ist, welcher auch als FDT-Container bezeichnet wird. Innerhalb eines FDT-Containers wird dann ein zur jeweiligen Feldbuskomponente passender DTM installiert, wobei der FDT-Container dann für die Abwicklung der Kommunikation zwischen der FDT-Rahmenapplikation und dem DTM zuständig ist. An oberster Stelle der DTM-Hierarchie steht der Kommunikations-DTM 111, der innerhalb des FDT-Containers 112 betrieben wird. Der Kommunikations-DTM 111 ist dem Feldzugangsgerät 101 zugeordnet und kommuniziert mit diesem über die Ethernetverbindung 110. Der Kommunikation-DTM 111 stellt in gewisser Weise die Außenschnittstelle der Gerätezugriffssoftware 109 dar. Sämtlicher ein- und ausgehender Datenverkehr wird über den Kommunikations-DTM 111 geführt.

Der Geräte-DTM 113 ist in der DTM-Hierarchie unterhalb des Kommunikations-DTM 111 angeordnet. Der Geräte-DTM 113 bildet die Funktionalität des Feldgeräts 103 ab und wird innerhalb des FDT-Containers 114 ausgeführt. In der Ebene unterhalb des Kommunikations-DTM 111 ist außerdem ein Gateway-DTM 115 angeordnet, der dem Gateway 104 zugeordnet ist und innerhalb des FDT-Containers 116 betrieben wird. Über den Gateway-DTM 115 kann der Gateway 104 parametriert und konfiguriert werden. Unterhalb des Gateway-DTM 115 in der DTM-Hierarchie sind zwei Geräte-DTMs 117, 118 angeordnet, die innerhalb der FDT-Container 119, 120 ausgeführt werden. Über die Geräte-DTMs 117, 118 kann auf die Feldgeräte 106, 107 zugegriffen werden. Neben dem Standard FDT/DTM gibt es eine Vielzahl von alternativen Standards für die Gerätezugriffssoftware und die darin eingebunden Gerätetreiber.

Der Datenaustausch zwischen der FDT-Rahmenapplikation und den in die Rahmenapplikation eingebundenen DTMs erfolgt über die FDT-Standardschnittstelle, die im FDT-Standard spezifiziert ist. Bei der in Fig. 1 gezeigten Darstellung ist diese FDT-Standardschnittstelle jeweils zwischen einem FDT-Container und dem jeweiligen darin instanziierten DTM vorgesehen und ermöglicht einen Datenaustausch zwischen dem zur Rahmenapplikation gehörigen FDT-Container und dem DTM. Über diese FDT-Standardschnittstelle kann die FDT-Rahmenapplikation Gerätespezifikationen zu den verschiedenen Feldgeräten und Feldbuskomponenten des Feldbusnetzwerks 100 abfragen und zusammentragen. Beispielsweise kann von der FDT-Rahmenapplikation aus eine Abfrage an eines der Feldgeräte oder an eine Feldbuskomponente gerichtet werden, mit der Gerätespezifikationen zum jeweiligen Gerät abgefragt werden. Auf eine derartige Anfrage hin übermittelt das jeweilige Feldgerät beispielsweise die Hersteller-ID, die Geräte-ID, die Geräteversion beziehungsweise Device Revision, das Geräteprofil beziehungsweise Profile Revision, die Softwareversion beziehungsweise Software Revision, die Protokollversion beziehungsweise Command Revision an die FDT-Rahmenapplikation. Diese Gerätespezifikationen werden über die FDT-Standardschnittstelle an die FDT-Rahmenapplikation übermittelt. Basierend auf diesen Informationen zu den einzelnen Geräten kann die FDT-Rahmenapplikation dem Benutzer die hierarchische Struktur des Feldbusnetzwerks 100 grafisch darstellen, vorzugsweise in Form einer Baumstruktur. Zusätzlich zu den regulären Funktionen der Feldgeräte haben in den letzten Jahren herstellerspezifische Zusatzfunktionen an Bedeutung gewonnen, die auf Seiten des Feldgeräts oder des zugehörigen DTMs gegen Bezahlung freischaltbar sind und dem Benutzer einen Zusatznutzen ermöglichen. Bei diesen Zusatzfunktionalitäten kann es sich beispielsweise um die Konnektivität zu einer Cloud, um Selbsttest- und Selbstdiagnosefunktionen, um Funktionen der funktionellen Sicherheit gemäß dem jeweiligen Sicherheits-Integritäts-Level (SIL), um Auswertungsfunktionen wie beispielsweise die Hüllkurvenfunktion bei der Füllstandsmessung, um Bedienungserleichterungen wie den One-Click Print sowie um unterschiedliche nativ übersetzte Sprachversionen bei der Benutzerführung handeln. Derartige Zusatzfunktionalitäten werden typischerweise durch Erwerb eines Freischaltcodes aktiviert. Wie in Fig. 1 gezeigt, können derartige Freischaltcodes 121, 122, 123 beispielsweise auf Seiten der jeweiligen Feldgeräte 103, 106, 107 hinterlegt werden.

Eine erste mögliche Zusatzfunktionalität, die gegen Bezahlung freigeschaltet werden kann, ist die Konnektivität zur Cloud, die auch als "Internet of Things", abgekürzt IoT, bezeichnet wird. Diese Funktionalität ermöglicht es, Daten von einem DTM aus über die FDT-Rahmenapplikation in die Cloud hochzuladen. Dort könne die Daten archiviert und mit anderen Daten verknüpft werden. Beispielsweise ist es möglich, Daten zur Durchflussmessung in die Cloud hochzuladen und als Basis für Nachbestellungen und Lagerhaltung zu verwenden. Die Nutzung der loT-Konnektivität wird auf Seiten des DTM freigeschaltet.

Eine weitere freischaltbare Zusatzfunktionalität ist die Fähigkeit zur Durchführung von Gerätefunktionsprüfungen und Selbsttests, die von Endress+Hauser unter der Bezeichnung "HeartBeat" angeboten wird. Eine kontinuierliche Gerätefunktionsprüfung ohne Prozessunterbrechung ermöglicht einen dokumentierten Nachweis der Gerätefunktionalität. Falls es zu Veränderungen des Messverhaltens kommt, kann der Wartungsbedarf frühzeitig erkannt werden. Die Freischaltung der Funktionalitäten zur kontinuierlichen Gerätefunktionsprüfung erfolgt auf Seiten des jeweiligen Feldgeräts.

Bei den freischaltbaren Zusatzfunktionalitäten kann es sich darüber hinaus um Funktionalitäten und Gerätemerkmale handeln, die sich auf eine bestimmte Stufe des Sicherheits-Integritäts-Levels (SIL) der Feldbuskomponente beziehen. Abhängig von der erforderlichen Sicherheitsstufe sind jeweils spezielle Auslegungen der Baugruppen und der Auswerteelektronik erforderlich, was unter anderem auch eine redundante Auslegung verschiedener Baugruppen umfassen kann.

Im Bereich Füllstandsmessung mittels Laufzeitverfahren (Time-of-Flight) kann als Zusatzfunktionalität eine Hüllkurvenanalyse freigeschaltet werden. Mittels einer derartigen Hüllkurve lässt sich insbesondere bei komplexen Reflektionssignalen, wie sie beispielsweise an schaumbildenden Flüssigkeiten, Schüttgütern, Suspensionen etc. auftreten, eine verbesserte Analyse des Messsignals durchführen. Da die Hüllkurvenanalyse Teil der Ansteuersoftware ist, erfolgt die Freischaltung der Hüllkurvenfunktionalität auf Seiten des DTM.

Als weitere Zusatzfunktionalität wäre der "One-Click Print" zu nennen, bei dem die Gerätedokumentation mit einem Mausklick ausgedruckt werden kann. Darüber hinaus umfassen die Zusatzfunktionalitäten auch verschiedene nativ übersetzte Sprachversionen für die Benutzerführung. Die unterschiedlichen Sprachversionen sind jeweils auf Seiten des Feldgeräts freischaltbar.

Es ist wünschenswert, auf Seiten der FDT-Rahmenapplikation Informationen zu den von den einzelnen Feldgeräten und Feldbuskomponenten unterstützten Zusatzfunktionalitäten und zu deren Freischaltstatus zur Verfügung zu haben, um dem Benutzer eine Übersicht über die von den Feldgeräten des Feldbusnetzwerks 100 unterstützten Zusatzfunktionalitäten zu bieten. Die Informationen zu den Zusatzfunktionalitäten könnten dann den Benutzern in einer Übersichtsdarstellung des Feldbusnetzwerks 100 bereitgestellt werden. Allerdings ist in der FDT-Standardschnittstelle, die im FDT-Standard definiert ist, keine Möglichkeit zur Übertragung derartiger Informationen von einem DTM zum zugehörigen FDT-Container vorgesehen.

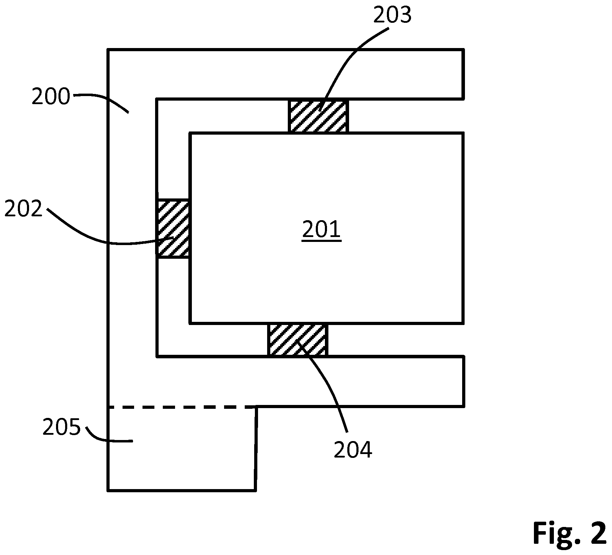

Insofern wird vorgeschlagen, eine oder mehrere zusätzliche proprietäre Schnittstellen zwischen DTM und FDT-Container aufzusetzen, welche die Übertragung von Informationen zu unterstützten Zusatzfunktionalitäten und deren Freischaltstatus vom DTM zur FDT-Rahmenapplikation ermöglichen. In Fig. 2 ist ein FDT-Container 200 zusammen mit einem innerhalb des FDT-Containers 200 instanziierten DTM 201 gezeigt. Neben der FDT-Standardschnittstelle 202 sind zusätzliche Schnittstellen 203, 204 für den Datenaustausch zwischen dem DTM 201 und dem FDT-Container 200 vorgesehen. Über die FDT-Standardschnittstelle 202 werden wie bisher Gerätespezifikationen zu dem jeweiligen Feldgerät beziehungsweise der jeweiligen Feldbuskomponente übermittelt, auf das vom DTM 201 aus zugegriffen wird. Beispielsweise werden über die FDT-Standardschnittstelle 202 die Hersteller-ID, die Geräte-ID, die Geräte-Version beziehungsweise Device Revision, das Geräteprofil beziehungsweise Profile Revision, die Softwareversion beziehungsweise Software Revision, die Protokoll-Version beziehungsweise Command Revision etc. übermittelt. Über die ein oder mehreren proprietären Schnittstellen 203, 204 dagegen können Informationen zu den Zusatzfunktionen des jeweiligen Feldgeräts beziehungsweise der jeweiligen Feldbuskomponente sowie zu deren Freischaltstatus übermittelt werden. Beispielsweise werden über diese proprietären Schnittstellen 203, 204 Informationen darüber übertragen, ob das Feldgerät oder die Feldbuskomponente, die vom DTM 201 angesteuert wird, für die Gerätefunktionsprüfung "HeartBeat" ausgelegt ist und ob diese Funktionalität freigeschaltet ist. Darüber hinaus können über die eine oder mehreren proprietären Schnittstellen 203, 204 auch weitere Gerätedaten vom DTM 201 über den FDT-Container 200 zur FDT-Rahmenapplikation übermittelt werden. Insbesondere können solche Daten und Informationen vom DTM 201 zur FDT-Rahmenapplikation übertragen werden, deren Übermittlung im FDT-Standard nicht vorgesehen ist. Auf diese Weise können die eine oder mehreren proprietären Schnittstellen 203, 204 dazu genutzt werden, zusätzliche Gerätedaten in Ergänzung zu den über die FDT-Schnittstelle 202 übertragbaren Daten vom DTM 201 zur FDT-Rahmenapplikation zu übertragen.

Auf Seiten der FDT-Rahmenapplikation können die vom DTM 201 übermittelten Informationen zu Zusatzfunktionalitäten dem Benutzer beispielsweise angezeigt werden. Außerdem kann auf Seiten der FDT-Rahmenapplikation zum Beispiel eine gemeinsame Datenstruktur vorgesehen sein, in der die Informationen zu den unterstützten Zusatzfunktionalitäten und deren Freischaltstatus für das gesamte Feldbusnetzwerk 100 abgespeichert werden. Darüber hinaus ist es beispielsweise möglich, die Informationen zu den Zusatzfunktionalitäten der einzelnen Feldbuskomponenten und Feldgeräte von der FDT-Rahmenapplikation aus in die Cloud hochzuladen, so dass in der Cloud sämtliche Informationen zu den von den Feldbuskomponenten unterstützten Funktionen und zu deren Freischaltstatus verfügbar sind. Diese Daten können dann als Basis für die Freischaltung weiterer Funktionen der Feldgeräte und Feldbuskomponenten im Feldbusnetzwerk 100 dienen.

Die proprietären Schnittstellen 203, 204 können auch für eine Datenübertragung in umgekehrter Richtung vom FDT-Container 200 zum DTM 201 ausgelegt sein. Auf diese Weise ist es beispielsweise möglich, von der FDT-Rahmenapplikation aus über eine der proprietären Schnittstellen 203, 204 Freischaltbefehle zur Freischaltung von Zusatzfunktionalitäten an die DTMs und die Feldbuskomponenten zu übermitteln und auf diese Weise Zusatzfunktionalitäten freizuschalten. Dadurch kann eine Freischaltung vor Ort entfallen. Außerdem ist es möglich, von der Cloud aus eine Freischaltung von Zusatzfunktionalitäten zu initiieren. Die Freischaltbefehle werden dann von der Cloud aus über die FDT-Rahmenapplikation und die proprietären Schnittstellen 203, 204 an die Feldbuskomponenten übermittelt. Die proprietären Schnittstellen 203, 204 können darüber hinaus dazu verwendet werden, vom DTM 201 aus die von der FDT-Rahmenapplikation unterstützten Funktionalitäten abzufragen. Beispielsweise kann vom DTM 201 aus abgefragt werden, ob die FDT-Rahmenapplikation eine loT-Konnektivität unterstützt. Auf diese Weise wird zwischen den DTMs und der FDT-Rahmenapplikation ein beiderseitiger Abgleich der jeweils vorhandenen Funktionalitäten ermöglicht. Als Ergebnis dieses Abgleichs können die dem Benutzer angezeigten Auswahlmöglichkeiten so angepasst werden, dass dem Benutzer letztendlich nur die tatsächlich durchgehend unterstützten Funktionalitäten als auswählbare Optionen angeboten werden.

Darüber hinaus kann eine der proprietären Schnittstellen als Meta-Schnittstelle ausgelegt sein, welche spezifiziert, welche zusätzlichen weiteren Schnittstellen vorgesehen sind und welche Datenformate von diesen weiteren Schnittstellen unterstützt werden. Beispielsweise könnte die Schnittstelle 203 als derartige Meta-Schnittstelle ausgebildet sein. Mittels einer derartigen Schnittstellenauslegung lässt sich der Datenaustausch zwischen DTM und FDT-Rahmenapplikation frei festlegen.

In dem FDT-Container 200 ist vorzugsweise eine Speicherstruktur 205 vorgesehen, in der Informationen zu Zusatzfunktionalitäten der vom DTM 201 angesteuerten Feldbuskomponente und des DTM 201 selbst abgelegt werden. Darüber hinaus können in der Speicherstruktur 205 Informationen zum Freischaltstatus dieser Zusatzfunktionalitäten abgespeichert werden. Insofern sind in der FDT-Rahmenapplikation zu jedem Knoten der DTM-Hierarchie Informationen zu den Zusatzfunktionalitäten der jeweiligen Feldbuskomponente und zu deren Freischaltstatus verfügbar. Diese Information kann dem Benutzer in Form einer Gesamtübersicht über die verfügbaren Zusatzfunktionalitäten präsentiert werden. Alternativ zu dieser Lösung könnten die Informationen zu den Zusatzfunktionalitäten auch jeweils bei Bedarf vom jeweiligen DTM 201 abgefragt werden, ohne auf Seiten der FDT-Rahmenapplikation gespeichert zu werden. Hierzu würde die FDT-Rahmenapplikation eine entsprechende Abfrage an den DTM 201 richten, der daraufhin hochgefahren wird und die benötigten Informationen zu den Zusatzfunktionalitäten der jeweiligen Feldbuskomponente an die FDT-Rahmenapplikation übermittelt. Diese vom DTM 201 erhaltenen Informationen können von der FDT-Rahmenapplikation aus auch in die Cloud geschrieben werden.

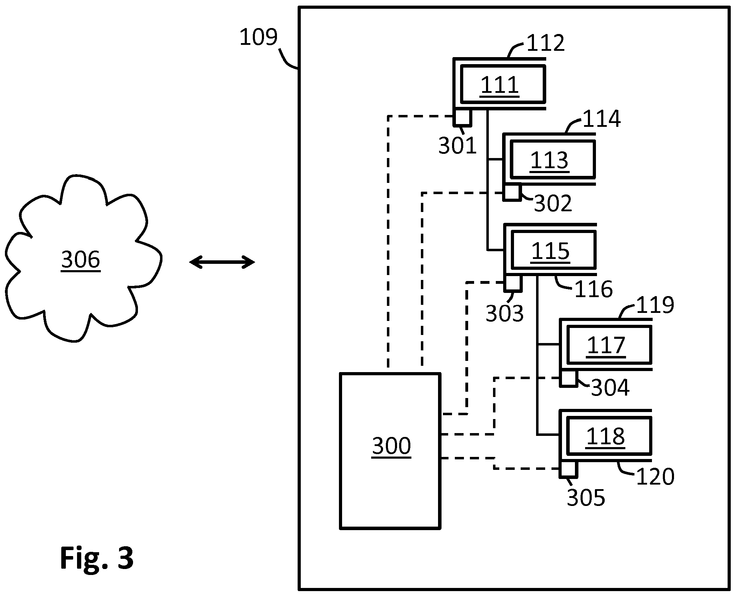

In Fig. 3 ist für das in Fig. 1 gegebene Beispiel dargestellt, wie die innerhalb der Gerätezugriffssoftware 109 zu den verschiedenen Knoten abgespeicherten Informationen über Zusatzfunktionalitäten mittels einer Zentralkomponente 300 zu einer Gesamtübersicht über das System zusammengeführt werden können. Die Informationen zu den Zusatzfunktionalitäten sind jeweils in den Datenstrukturen 301 bis 305 abgespeichert, die Teil der jeweiligen FDT-Container 112, 114, 116, 119, 120 sind. Die Zentralkomponente 300 kann nun auf diese Datenstrukturen 301 bis 305 zugreifen und die darin enthaltenen Informationen zusammenführen. Diese Informationen zu den Zusatzfunktionalitäten, die von den Feldgeräten und Feldbuskomponenten des Feldbusnetzwerks 100 unterstützt werden, können beispielsweise in einer gemeinsamen Datenstruktur abgespeichert werden, wobei zu jeder Zusatzfunktionalitäten auch ein zugehöriger Freischaltstatus gespeichert werden kann. Die Informationen zu den Zusatzfunktionalitäten können von der FDT-Rahmenapplikation aus wie in Fig. 3 gezeigt in die Cloud 306 hochgeladen werden, sofern die FDT-Rahmenapplikation über die hierfür benötigte loT-Konnektivität verfügt. Von der Cloud aus könnte dann beispielsweise eine Freischaltung von zusätzlich benötigten Funktionalitäten erfolgen. Die Informationen zu den Zusatzfunktionalitäten können dem Benutzer darüber hinaus in Form einer Gesamtübersicht präsentiert werden. Üblicherweise wird die hierarchische Struktur des Feldbusnetzwerks 100 von der FDT-Rahmenapplikation in Form einer Baumstruktur auf einer graphischen Benutzeroberfläche dargestellt. Informationen zu Zusatzfunktionalitäten können beispielsweise in die Baumstruktur eingefügt werden, die von der FDT-Rahmenapplikation präsentiert wird. Alternativ dazu oder zusätzlich können die Informationen zu Zusatzfunktionen und Freischaltstatus in einer Matrix dargestellt werden, in der zu jedem Feldgerät und jeder Feldbuskomponente die verfügbaren Zusatzfunktionalitäten und deren Freischaltstatus angezeigt werden.

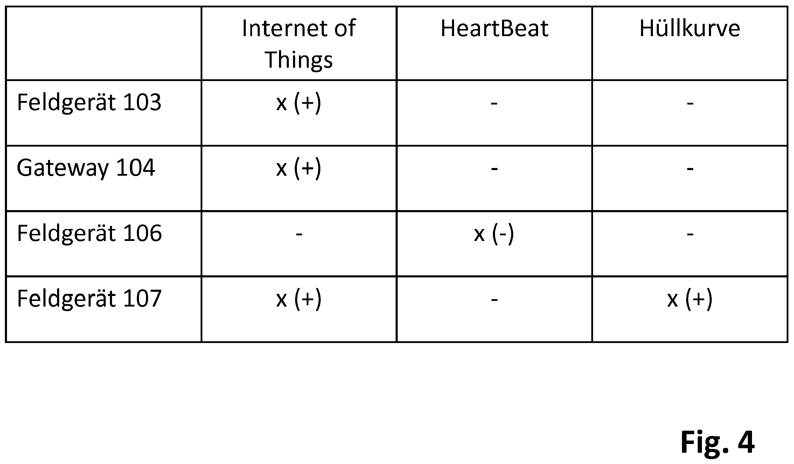

In Fig. 4 ist eine derartige Matrix für das in Fig. 1 und Fig. 3 gezeigte Beispiel angegeben. In dieser Matrix sind die Feldgeräte beziehungsweise Feldbuskomponenten von oben nach unten aufgetragen, sodass nacheinander das Feldgerät 103, das Gatewaygerät 104, das Feldgerät 106 und das Feldgerät 107 aufgelistet sind. Von links nach rechts dagegen sind die möglichen Zusatzfunktionalitäten aufgeführt, im vorliegenden Beispiel also "Internet of Things", "HeartBeat" und "Hüllkurve". Aus der Matrixdarstellung ist erkennbar, dass das Feldgerät 103 für eine loT-Konnektivität ausgestattet ist. Das Pluszeichen zeigt dabei an, das diese Funktionalität auch freigeschaltet ist. Das Gatewaygerät 104 verfügt ebenfalls über eine freigeschaltete loT-Konnektivität. Das Feldgerät 106 ist mit der HeartBeat-Funktionalität zur kontinuierlichen Gerätefunktionsprüfung ausgestattet, diese Funktionalität ist jedoch nicht freigeschaltet. Das Feldgerät 107 verfügt über eine loT-Konnektivität und über die Möglichkeit der Hüllkurvenanalyse, wobei beide Zusatzfunktionalitäten freigeschaltet sind.

Die in Fig. 4 gezeigte Matrix ermöglicht dem Benutzer einen Überblick über die verfügbaren Zusatzfunktionalitäten. Dadurch können die Möglichkeiten des bestehenden Feldbusnetzwerks 100 erkannt und genutzt werden. Darüber hinaus zeigt die in Fig. 4 dargestellte Matrix dem Benutzer aber auch an, welche Funktionalitäten zwar vorhanden, aber noch nicht freigeschaltet sind. Der Benutzer wird also über latente und brachliegende Potenziale seiner Anlage und entsprechende Ausbau- und Erweiterungsmöglichkeiten informiert, sodass er durch Freischaltung zusätzlicher Funktionalitäten das Leistungspotenzial seiner Anlage besser ausschöpfen kann. Die in Fig. 4 gezeigte Matrixdarstellung ist insbesondere auch für Vertriebsmitarbeiter interessant, um auf der Basis der von den einzelnen Feldgeräten unterstützten Funktionalitäten passende Angebote zum Ausbau und zur Erweiterung der Anlage sowie zur Erweiterung des Funktionsumfangs vorschlagen zu können. Insbesondere könnte ein Vertriebsmitarbeiter aus der Matrixdarstellung ablesen, welche noch nicht freigeschalteten Funktionalitäten noch freigeschaltet werden könnten.

Zum Aufsetzen der Gerätezugriffssoftware 109 und zum Einbinden der benötigten Treiber und DTMs in die FDT-Rahmenapplikation wird vorzugsweise automatisch oder manuell ein Scan des gesamten Feldbusnetzwerks 100 durchgeführt, wobei im Rahmen dieses Scanvorgangs die Gerätespezifikationen der verschiedenen Feldgeräte und Feldbuskomponenten des Feldbusnetzwerks 100 abgefragt werden. In diesen Scanvorgang kann zusätzlich die Abfrage der verschiedenen unterstützten Zusatzfunktionalitäten integriert werden.

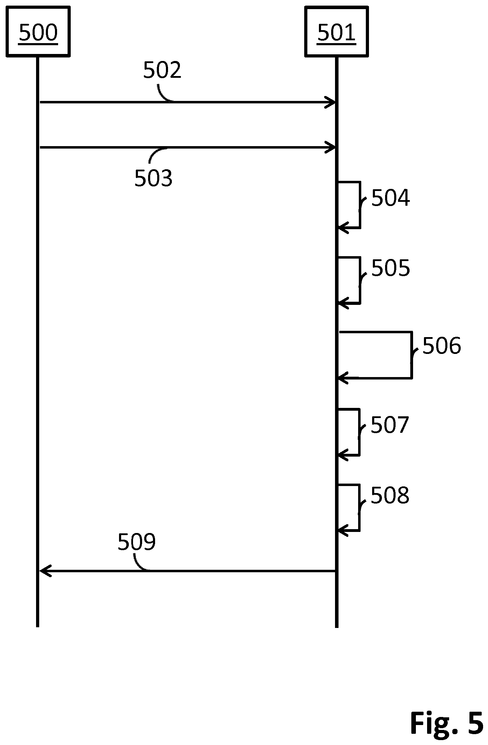

Die Interaktion zwischen einem Benutzer 500 und einer FDT-Rahmenapplikation 501 bei der Durchführung eines derartigen Scans des Feldbusnetzwerks 100 ist in Fig.5 gezeigt. Zu Beginn instanziiert der Benutzer 500 in Schritt 502 innerhalb der FDT-Rahmenapplikation 501 einen Kommunikations-DTM. Dann startet der Benutzer 500 im nächsten Schritt 503 einen Scan des gesamten Feldbusnetzwerks 100. Dabei wird als erstes ein Scan über den Adressraum des Feldzugangsgeräts 101 durchgeführt. Innerhalb dieses Adressraums werden das Feldgerät 103 sowie das Gatewaygerät 104 gefunden. Daraufhin werden von der FDT-Rahmenapplikation 501 aus die Gerätespezifikationen des gefunden Feldgeräts 103 und des gefundenen Gatewaygeräts 104 abgefragt, welche zum Beispiel ein oder mehrere vom Folgenden umfassen: Hersteller-ID, Geräte-ID, Geräteversion beziehungsweise Device Revision, Geräteprofil beziehungsweise Profile Revision, Softwareversion beziehungsweise Software Revision, Protokollversion beziehungsweise Command Revision. Die abgefragten Gerätespezifikationen werden über die FDT-Standardschnittstelle 202 zur FDT-Rahmenapplikation 501 übertragen. Anhand der so ermittelten Gerätespezifikationen des Feldgeräts 103 und des Gatewaygeräts 104 können dann auf Seiten der FDT-Rahmenapplikation 501 passende Treiber beziehungsweise DTMs für die beiden Geräte ausgewählt werden. Bei der Auswahl geeigneter Treiber sind Abweichungen zwischen Treiberversion und Geräteversion in gewissem Umfang tolerierbar. Wenn geeignete DTMs gefunden sind, werden diese DTMs in die Treiberhierarchie der FDT-Rahmenapplikation 501 eingefügt. Im Schritt 504 wird der DTM für das Feldgerät 103 instanziiert und im Schritt 505 wird der DTM für das Gatewaygerät 104 instanziiert. Die DTMs werden hochgefahren, um anschließend mittels der DTMs die Zusatzfunktionalitäten abzufragen, die vom Feldgerät 103 und vom Gatewaygerät 104 unterstützt werden. Darüber hinaus kann von den DTMs aus abgefragt werden, ob diese unterstützten Zusatzfunktionalitäten auch freigeschaltet sind. Die Informationen über die Zusatzfunktionalitäten und deren Freischaltstatus werden von den DTMs aus über mindestens eine der proprietären Schnittstellen 203, 204 zur FDT-Rahmenapplikation 501 übermittelt.

Durch das Scannen des Adressraums des Feldzugangsgeräts 101 ist die Topologie des Feldbusnetzwerks 100 jetzt bis zum Gateway 104 hin bekannt. Die Topologie in den Hierarchieebenen unterhalb des Gateways 104 ist jedoch noch unbekannt. Zur Erfassung der Topologie unterhalb des gefundenen Gateways 104 triggert die FDT-Rahmenapplikation 501 im Schritt 506 einen Scan des Adressraums des Gateways 104. Dabei kann die FDT-Rahmenapplikation 501 dazu ausgelegt sein, für jedes gefundene Gatewaygerät selbsttätig einen Scan des Adressraums des Gatewaygeräts zu instanziieren. Alternativ dazu könnte für jedes gefundene Gatewaygerät manuell ein Scan des zugehörigen Adressraums angestoßen werden. Während des Scannens des Adressraums des Gatewaygeräts 104 werden die beiden Feldgeräte 106 und 107 gefunden. Von der FDT-Rahmenapplikation 501 aus werden daraufhin die Gerätespezifikationen für die beiden Feldgeräte 106 und 107 abgefragt, welche dann über die FDT-Standardschnittstelle 202 zur FDT-Rahmenapplikation 501 übermittelt werden. Auf Seiten der FDT-Rahmenapplikation 501 werden jeweils geeignete Treiber beziehungsweise DTMs für die beiden Feldgeräte 106 und 107 ausgewählt. In Schritt 507 wird von der FDT-Rahmenapplikation 501 ein Geräte-DTM für das Feldgerät 106 instanziiert und in Schritt 508 wird ein Geräte-DTM für das Feldgerät 107 instanziiert. Die beiden Geräte-DTMs werden hochgefahren, um über die beiden Geräte-DTMs als nächstes Zusatzfunktionalitäten und Freischaltstatus von den beiden gefundenen Feldgeräten 106 und 107 abzufragen. Die Informationen über die Zusatzfunktionalitäten und deren Freischaltstatus werden von den DTMs aus über mindestens eine der proprietären Schnittstellen 203, 204 zur FDT-Rahmenapplikation 501 übermittelt.

Beim zuletzt durchgeführten Scan des Adressraums von Gatewaygerät 104 wurden lediglich Feldgeräte gefunden, aber keine Gatewaygeräte mehr. Insofern ist klar, dass man am Ende eines Astes des verzweigten Feldbusnetzwerks 100 angekommen ist. Man hat sozusagen die "Blätter" des Verzweigungsbaums erreicht. Nachdem es im Feldbusnetzwerk 100 keine weiteren zu scannenden Äste gibt, teilt die FDT-Rahmenapplikation 501 dem Benutzer 500 im Schritt 509 mit, dass der Scanvorgang für das gesamte Feldbusnetzwerks 100 abgeschlossen ist. Bei dem oben beschriebenen Scanvorgang werden sämtliche Informationen zu Zusatzfunktionalitäten und Freischaltstatus für sämtliche Feldgeräte und Feldbuskomponenten ermittelt und jeweils über die proprietäre Schnittstelle zur FDT-Rahmenapplikation übertragen, sodass nach Abschluss des Scanvorgangs auch sämtliche Informationen zu Zusatzfunktionalitäten zur Verfügung stehen.

Alternativ dazu ist es möglich, die unterstützten Zusatzfunktionalitäten von einem bestimmten Feldgerät einzeln abzufragen. Hierzu wird von der FDT-Rahmenapplikation 501 aus der zugehörige DTM aufgerufen und hochgefahren, welcher dann von dem zugehörigen Feldgerät die benötigten Informationen zu Zusatzfunktionalitäten und Freischaltstatus abruft und über mindestens eine der proprietären Schnittstellen 203, 204 an die FDT-Rahmenapplikation übermittelt. Auf diese Weise kann jederzeit abgefragt werden, welche Zusatzfunktionalitäten von einem bestimmten Feldgerät unterstützt werden und welche dieser Funktionalitäten freigeschaltet sind.

## Patentansprüche

1. Eine Rahmenapplikation (501) für eine Gerätezugriffssoftware (109), wobei die Rahmenapplikation (501) auf einem Host (108) installiert ist und wobei in die Rahmenapplikation (501) mindestens ein Treiber (111, 113, 115, 117, 118, 201) eingebunden ist, der für einen Zugriff auf eine zugehörige Feldbuskomponente (101, 103, 104, 106, 107) eines Feldbusnetzwerks (100) ausgelegt ist,
wobei die Rahmenapplikation (501)zu jedem eingebundenen Treiber (111, 113, 115, 117, 118, 201) eine Standardschnittstelle (202) aufweist, die für einen Datenaustausch zwischen dem Treiber und der Rahmenapplikation (501) ausgestaltet ist,
**dadurch gekennzeichnet, dass**
die Rahmenapplikation (501)zu zumindest einigen der eingebundenen Treiber (111, 113, 115, 117, 118, 201) zusätzlich zu der Standardschnittstelle (202) eine oder mehrere proprietäre Schnittstellen (203, 204) aufweist, die für einen Datenaustausch zwischen dem jeweiligen Treiber und der Rahmenapplikation (501) ausgestaltet sind, wobei der Treiber (111, 113, 115, 117, 118, 201) dazu ausgestaltet ist, Informationen zu Zusatzfunktionalitäten, die von dem Treiber (111, 113, 115, 117, 118, 201) oder einer zugehörigen Feldbuskomponente (101, 103, 104, 106, 107) unterstützt werden, über zumindest eine der proprietären Schnittstellen (202, 203) zur Rahmenapplikation (501) zu übermitteln,
wobei die Zusatzfunktionalitäten mindestens eine von folgenden umfassen:
eine Zusatzfunktionalität, die sich auf eine bestimmte Stufe des Sicherheits-Integritäts-Levels der Feldbuskomponente bezieht;
eine Zusatzfunktionalität zur Durchführung von Gerätefunktionsprüfungen;
eine Zusatzfunktionalität zum Ausdrucken von Dokumentation zur jeweiligen Feldbuskomponente mittels eines Klicks;
eine Zusatzfunktionalität zur Auswertung von Messsignalen zur Laufzeitmessung mittels einer Hüllkurve;
eine Zusatzfunktionalität betreffend eine Konnektivität zu einer Cloud;
eine Zusatzfunktionalität betreffend eine nativ übersetzte Sprachversion zur Benutzerführung.

2. Rahmenapplikation nach Anspruch 1, **dadurch gekennzeichnet, dass** die Rahmenapplikation dazu ausgelegt ist, die Informationen zu Zusatzfunktionalitäten zusammenzuführen.

3. Rahmenapplikation nach Anspruch 1 oder Anspruch 2, **dadurch gekennzeichnet, dass** die Rahmenapplikation dazu ausgelegt ist, die Informationen zu Zusatzfunktionalitäten entsprechend mindestens einer von folgenden Möglichkeiten zu verarbeiten: die Informationen zumindest teilweise auf einer graphischen Benutzeroberfläche darzustellen, die Informationen zumindest teilweise in einer Datenstruktur innerhalb der Rahmenapplikation zu speichern, die Informationen zumindest teilweise in eine Cloud hochzuladen.

4. Rahmenapplikation nach einem der Ansprüche 1 bis 3, **gekennzeichnet durch** mindestens eines von folgenden:
die Rahmenapplikation weist zur Einbindung von Treibern mindestens eine Containerkomponente auf, wobei in einer Containerkomponente jeweils ein Treiber für einen Zugriff auf eine zugehörige Feldbuskomponente installierbar ist;
zwischen einer Containerkomponente und einem in der Containerkomponente installierten Treiber ist jeweils eine Standardschnittstelle vorgesehen, über die ein Datenaustausch zwischen der Containerkomponente und dem Treiber erfolgen kann;
zwischen der Containerkomponente und dem in der Containerkomponente installierten Treiber ist zusätzlich jeweils mindestens eine proprietäre Schnittstelle vorgesehen, über die ein Datenaustausch zwischen der Containerkomponente und dem Treiber erfolgen kann.

5. Rahmenapplikation nach einem der Ansprüche 1 bis 4, **dadurch gekennzeichnet, dass** in der Rahmenapplikation zu einer Feldbuskomponente des Feldbusnetzwerks jeweils eine zugeordnete Datenstruktur vorgesehen ist, in der Informationen zu von der Feldbuskomponente oder dem zugehörigen Treiber unterstützten Zusatzfunktionalitäten abspeicherbar sind.

6. Rahmenapplikation nach einem der Ansprüche 1 bis 5, **dadurch gekennzeichnet, dass** zu einer Containerkomponente der Rahmenapplikation der Containerkomponente zugeordnete oder zur Containerkomponente gehörige Datenstrukturen vorgesehen sind, die dazu ausgelegt sind, Informationen zu Zusatzfunktionalitäten des in der Containerkomponente installierten Treibers und der zugehörigen Feldbuskomponente zu speichern.

7. Rahmenapplikation nach einem der Ansprüche 1 bis 6, **dadurch gekennzeichnet, dass** Informationen zum Freischaltstatus der Zusatzfunktionalitäten über mindestens eine der proprietären Schnittstellen von einem Treiber zur Rahmenapplikation übermittelbar sind,und/oder dass über die Standardschnittstelle Gerätespezifikationen der jeweiligen Feldbuskomponente von dem Treiber zur Rahmenapplikation übertragbar sind.

8. Rahmenapplikation nach einem der Ansprüche 1 bis 7, **dadurch gekennzeichnet, dass** die Rahmenapplikation eine Zentralkomponente umfasst, die dazu ausgelegt ist, Informationen über Zusatzfunktionalitäten auszulesen und zusammenzuführen.

9. Rahmenapplikation nach einem der Ansprüche 1 bis 8, **gekennzeichnet durch** mindestens eines von folgenden:
die Rahmenapplikation ist dazu ausgelegt, Informationen über Zusatzfunktionalitäten zusammenzuführen und in einer Übersichtsdarstellung des Feldbusnetzwerks auf einer graphischen Benutzeroberfläche darzustellen;
Informationen zum Freischaltstatus der Zusatzfunktionalitäten sind über mindestens eine der proprietären Schnittstellen von einem Treiber zur Rahmenapplikation übermittelbar, wobei die Rahmenapplikation dazu ausgelegt ist, Informationen über von den Feldbuskomponenten unterstützte Zusatzfunktionalitäten zusammen mit dem Freischaltstatus dieser Zusatzfunktionalitäten darzustellen;
die Rahmenapplikation ist dazu ausgelegt, die von den Feldbuskomponenten unterstützten Zusatzfunktionalitäten und deren Freischaltstatus in Form einer Matrixdarstellung auf einer graphischen Benutzeroberfläche darzustellen;
die Rahmenapplikation ist dazu ausgelegt, Informationen über die von den Feldbuskomponenten unterstützten Zusatzfunktionalitäten in eine Cloud hochzuladen.

10. Rahmenapplikation nach einem der Ansprüche 1 bis 9, **gekennzeichnet durch** eines von folgenden:
die Rahmenapplikation ist dazu ausgelegt, einen Freischaltbefehl zu erzeugen, den Freischaltbefehlt über eine der proprietären Schnittstellen und einen in die Rahmenapplikation eingebundenen Treiber an eine Feldbuskomponente zu übermitteln und mindestens eine von der Feldbuskomponente unterstützte Zusatzfunktionalität freizuschalten;
die Rahmenapplikation ist dazu ausgelegt, von einer Cloud einen Freischaltbefehl zu empfangen, den Freischaltbefehl über eine der proprietären Schnittstellen und einen in die Rahmenapplikation eingebundenen Treiber an eine Feldbuskomponente zu übermitteln und mindestens eine von der Feldbuskomponente unterstützte Zusatzfunktionalität freizuschalten.

11. Rahmenapplikation nach einem der Ansprüche 1 bis 10, **dadurch gekennzeichnet, dass** die mindestens eine proprietäre Schnittstelle eine Metaschnittstelle umfasst, welche der Rahmenapplikation Informationen zu Anzahl und Auslegung der weiteren proprietären Schnittstellen zur Verfügung stellt.

12. Rahmenapplikation nach einem der Ansprüche 1 bis 11, **gekennzeichnet durch** eines von folgenden:
Information zum Funktionsumfang der Rahmenapplikation ist über mindestens eine der proprietären Schnittstellen von der Rahmenapplikation zu einem Treiber übertragbar;
die Rahmenapplikation ist dazu ausgelegt, über eine oder mehrere der proprietären Schnittstellen einen Abgleich der Funktionalitäten zwischen Rahmenapplikation, Treibern und Feldbuskomponenten durchzuführen.

13. Rahmenapplikation nach einem der Ansprüche 1 bis 12, **gekennzeichnet durch** eines von folgenden:
bei der Rahmenapplikation handelt es sich um eine FDT-Rahmenapplikation;
bei der Standardschnittstelle handelt es sich um die FDT-Standardschnittstelle;
bei den Treibern handelt es sich um DTMs;
innerhalb des Feldbusnetzwerks wird mindestens einer von folgenden Feldbusstandards eingesetzt: Profibus, Foundation Fieldbus, HART, Industrial Ethernet;
die Treiber entsprechen mindestens einem von folgenden Standards: DD, EDD, EDS, DTM, FDI Device Packages;
bei der jeweiligen Feldbuskomponente handelt es sich um ein Feldgerät, ein Gatewaygerät oder ein Zugangsgerät.

14. Eine Gerätezugriffssoftware, welche eine Rahmenapplikation gemäß einem der Ansprüche 1 bis 13 und mindestens einen in die Rahmenapplikation eingebundenen Treiber für einen Zugriff auf eine zugehörige Feldbuskomponente aufweist.

15. Ein Verfahren zum Einholen von Informationen zu Zusatzfunktionalitäten von Feldbuskomponenten (101, 103, 104, 106, 107) eines Feldbusnetzwerks (100) oder von deren Treibern (111, 113, 115, 117, 118, 201) von einer Rahmenapplikation (501) aus, wobei die Rahmenapplikation (501) zusammen mit mindestens einem in die Rahmenapplikation eingebundenen Treiber (111, 113, 115, 117, 118, 201) auf einem Host (108) installiert ist, der in Datenverbindung mit einem Feldbusnetzwerk (100) steht, wobei der mindestens eine Treiber (111, 113, 115, 117, 118, 201) jeweils für einen Zugriff auf eine zugehörige Feldbuskomponente (101, 103, 104, 106, 107) des Feldbusnetzwerks (100) ausgelegt ist,
wobei die Rahmenapplikation (501)zu jedem eingebundenen Treiber (111, 113, 115, 117, 118, 201) eine Standardschnittstelle (202) aufweist, über die ein Datenaustausch zwischen dem Treiber und der Rahmenapplikation erfolgt,
und wobei das Verfahren aufweist:
Anfordern von Informationen zu Zusatzfunktionalitäten einer Feldbuskomponente (101, 103, 104, 106, 107) oder von deren Treiber (111, 113, 115, 117, 118, 201) von der
Rahmenapplikation (501) aus,
Übertragen der Informationen zu Zusatzfunktionalitäten der Feldbuskomponente (101, 103, 104, 106, 107) oder von deren Treiber (111, 113, 115, 117, 118, 201) vom Treiber der Feldbuskomponente (101, 103, 104, 106, 107) zur Rahmenapplikation (501) über mindestens eine proprietäre Schnittstelle (203, 204), welche zusätzlich zur Standardschnittstelle (202) zwischen dem Treiber und der Rahmenapplikation (501) vorgesehen ist, wobei die Zusatzfunktionalitäten mindestens eine von folgenden umfassen:
eine Zusatzfunktionalität, die sich auf eine bestimmte Stufe des Sicherheits-Integritäts-Levels der Feldbuskomponente bezieht;
eine Zusatzfunktionalität zur Durchführung von Gerätefunktionsprüfungen;
eine Zusatzfunktionalität zum Ausdrucken von Dokumentation zur jeweiligen Feldbuskomponente mittels eines Klicks;
eine Zusatzfunktionalität zur Auswertung von Messsignalen zur Laufzeitmessung mittels einer Hüllkurve;
eine Zusatzfunktionalität betreffend eine Konnektivität zu einer Cloud;
eine Zusatzfunktionalität betreffend eine nativ übersetzte Sprachversion zur Benutzerführung.

## Claims

1. A framework application (501) for a device access software (109), wherein the framework application (501) is installed on a host (108) and wherein at least one driver (111, 113, 115, 117, 118, 201) is integrated in the framework application (501), said driver (111, 113, 115, 117, 118, 201) being designed to access an associated fieldbus component (101, 103, 104, 106, 107) of a fieldbus network (100), wherein the framework application (501) has a standard interface (202) to each integrated driver (111, 113, 115, 117, 118, 201), wherein said interface is designed to exchange data between the driver and the framework application (501),
**characterized in that**
in addition to the standard interface (202), the framework application (501) has one or more proprietary interfaces (203, 204) to at least some of the integrated drivers (111, 113, 115, 117, 118, 201), said interfaces being designed for the exchange of data between the respective driver and the framework application (501), wherein the driver (111, 113, 115, 117, 118, 201) is designed to transmit information about supplementary functionalities, which are supported by the driver (111, 113, 115, 117, 118, 201) or an associated fieldbus component (101, 103, 104, 106, 107) to the framework application (501) via at least one of the proprietary interfaces (202, 203),
wherein the supplementary functionalities comprise at least one of the following elements:
a supplementary functionality which refers to a specific level of the security integrity level of the fieldbus component;
a supplementary functionality to perform device function checks;
a supplementary functionality to print out, at a click, documentation pertaining to the corresponding fieldbus component;
a supplementary functionality for the evaluation of measuring signals for transit time measurement using an envelope curve;
a supplementary functionality concerning the connectivity to a cloud;
a supplementary functionality concerning a translated native language version of the user guide.

2. Framework application as claimed in Claim 1, **characterized in that** the framework application is designed to br50ing together information about the supplementary functionalities.

3. Framework application as claimed in Claim 1 or Claim 2, **characterized in that** the framework application is designed to process the information regarding the supplementary functionalities according to at least one of the following options:
presentation of the information at least partially on a graphic user interface,
storage of the information at least partially in a data structure within the framework application, uploading the information at least partially to a cloud.

4. Framework application as claimed in one of the Claims 1 to 3, **characterized by** at least one of the following elements:
the framework application has at least one container component for the integration of drivers, wherein one driver can be installed in a container component for access to an associated fieldbus component;
a standard interface is provided in each case between a container component and a driver installed in the container component by means of which data can be exchanged between the container component and the driver;
in addition at least one proprietary interface is provided in each case between the container component and the driver installed in the container component by means of which data can be exchanged between the container component and the driver.

5. Framework application as claimed in one of the Claims 1 to 4, **characterized in that** a data structure assigned to a fieldbus component of the fieldbus network is provided in the framework application, wherein information about the supplementary functionalities supported by the fieldbus component or the associated driver can be saved in the data structure.

6. Framework application as claimed in one of the Claims 1 to 5, **characterized in that** data structures assigned to the container component or data structures pertaining to the container component are provided for a container component of the framework application, wherein said data structures are designed to store information pertaining to the supplementary functionalities of the driver installed in the container component and to the associated fieldbus component.

7. Framework application as claimed in one of the Claims 1 to 6, **characterized in that** information regarding the activation state of the supplementary functionalities can be transmitted from a driver to the framework application via at least one of the proprietary interfaces, and/or device specifications of the respective fieldbus component can be transmitted from the driver to the framework application via the standard interface.

8. Framework application as claimed in one of the Claims 1 to 7, **characterized in that** the framework application comprises a central component designed to read and merge information about supplementary functionalities.

9. Framework application as claimed in one of the Claims 1 to 8, **characterized by** at least one of the following elements:
the framework application is designed to merge information about supplementary functionalities and to present this information in an overview of the fieldbus network on a graphic user interface;
information about the activation state of the supplementary functionalities can be transmitted from a driver to the framework application via at least one of the proprietary interfaces, wherein the framework application is designed to present information about the supplementary functionalities supported by the fieldbus components together with the activation state of these supplementary functionalities;
the framework application is designed to present the supplementary functionalities supported by the fieldbus components, and their activation state in the form of a matrix presentation on a graphic user interface;
the framework application is designed to upload information about the supplementary functionalities supported by the fieldbus components to a cloud.

10. Framework application as claimed in one of the Claims 1 to 9, **characterized by** one of the following elements:
the framework application is designed to generate an activation command, to transmit the activation command to a fieldbus component via one of the proprietary interfaces and a driver integrated into the framework application, and to activate at least one supplementary functionality that is supported by the fieldbus component;
the framework application is designed to receive an activation command from a cloud, to transmit the activation command to a fieldbus component via one of the proprietary interfaces and a driver integrated into the framework application, and to activate at least one supplementary functionality that is supported by the fieldbus component.

11. Framework application as claimed in one of the Claims 1 to 10, **characterized in that** the at least one proprietary interface comprises a meta-interface which provides the framework application with information about the number and layout of the additional proprietary interfaces.

12. Framework application as claimed in one of the Claims 1 to 11, **characterized by** one of the following elements:
information about the functional scope of the framework application can be transmitted from the framework application to a driver by means of at least one of the proprietary interfaces;
the framework application is designed to perform a comparison of the functionalities between the framework application, the drivers and the fieldbus components by means of one or more of the proprietary interfaces.

13. Framework application as claimed in one of the Claims 1 to 12, **characterized by** one of the following elements:
the framework application is an FDT framework application;
the standard interface is an FDT standard interface;
the drivers are DTMs (Device Type Manager);
at least one of the following fieldbus standards is used in the fieldbus network:
Profibus, Foundation Fieldbus, HART, Industrial Ethernet;
the drivers comply with at least one of the following standards: DD, EDD, EDS, DTM, FDI Device Packages;
the fieldbus component is a field device, a gateway device or an access device.

14. Device access software, which has a framework application as claimed in one of the Claims 1 to 13 and at least a driver integrated in the framework application for access to an associated fieldbus component.

15. A procedure designed to obtain information about the supplementary functionalities of fieldbus components (101, 103, 104, 106, 107) of a fieldbus network (100) or of their drivers (111, 113, 115, 117, 118, 201) from a framework application (501),
wherein the framework application (501) is installed on a host (108) together with at least one driver (111, 113, 115, 117, 118, 201) integrated in the framework application, said host having a data connection with a fieldbus network (100), wherein the at least one driver (111, 113, 115, 117, 118, 201) is designed for access to an associated fieldbus component (101, 103, 104, 106, 107) of the fieldbus network (100),
wherein the framework application (501) has a standard interface (202) to every integrated driver (111, 113, 115, 117, 118, 201), via which data exchange takes place between the driver and the framework application,
and wherein the procedure comprises the following steps:
Request for information about supplementary functionalities of a fieldbus component (101, 103, 104, 106, 107) or its driver (111, 113, 115, 117, 118, 201) from the framework application (501),
Transmission of the information about supplementary functionalities of the fieldbus component (101, 103, 104, 106, 107) or its driver (111, 113, 115, 117, 118, 201) from the driver of the fieldbus component (101, 103, 104, 106, 107) to the framework application (501) by means of at least one proprietary interface (203, 204) which is provided, in addition to the standard interface (202), between the driver and the framework application (501), wherein the supplementary functionalities comprise at least one of the following elements:
a supplementary functionality which refers to a specific level of the safety integrity level of the fieldbus component;
a supplementary functionality to perform device function checks;
a supplementary functionality to print out documentation, at a click, pertaining to the individual fieldbus component;
a supplementary functionality to evaluate measuring signals for transit time measurement using an envelope curve;
a supplementary functionality concerning a connectivity to a cloud;
a supplementary functionality concerning a translated native language version of the user guide.

## Revendications

1. Application cadre (501) pour un logiciel d'accès aux appareils (109), l'application cadre (501) étant installée sur un hôte (108) et au moins un pilote (111, 113, 115, 117, 118, 201) étant intégré dans l'application cadre (501), lequel pilote (111, 113, 115, 117, 118, 201) est conçu pour accéder à un composant de bus de terrain associé (101, 103, 104, 106, 107) d'un réseau de bus de terrain (100), l'application cadre (501) présentant une interface standard (202) avec chaque pilote intégré (111, 113, 115, 117, 118, 201), laquelle interface est conçue pour un échange de données entre le pilote et l'application cadre (501),
**caractérisée en ce que**
l'application cadre (501) présente, en plus de l'interface standard (202), une ou plusieurs interfaces propriétaires (203, 204) avec au moins certains des pilotes intégrés (111, 113, 115, 117, 118, 201), lesquelles interfaces sont conçues pour un échange de données entre le pilote respectif et l'application cadre (501), le pilote (111, 113, 115, 117, 118, 201) étant conçu pour transmettre des informations sur des fonctionnalités supplémentaires, qui sont prises en charge par le pilote (111, 113, 115, 117, 118, 201) ou un composant de bus de terrain associé (101, 103, 104, 106, 107), par l'intermédiaire d'au moins une des interfaces propriétaires (202, 203) avec l'application cadre (501),
les fonctionnalités supplémentaires comprenant au moins l'un des éléments suivants :
une fonctionnalité supplémentaire relative à un niveau spécifique d'intégrité de sécurité du composant de bus de terrain ;
une fonctionnalité supplémentaire permettant d'effectuer des tests fonctionnels de l'appareil ;
une fonctionnalité supplémentaire permettant d'imprimer, au moyen d'un clic, la documentation relative au composant de bus de terrain correspondant ;
une fonctionnalité supplémentaire permettant d'évaluer les signaux de mesure pour la mesure du temps de transit au moyen d'une courbe d'enveloppe ; une fonctionnalité supplémentaire relative à la connectivité à un cloud ;
une fonctionnalité supplémentaire concernant une version linguistique traduite en natif pour le guidage de l'utilisateur.

2. Application cadre selon la revendication 1, **caractérisée en ce que** l'application cadre est conçue pour rassembler les informations sur les fonctionnalités supplémentaires.

3. Application cadre selon la revendication 1 ou la revendication 2, **caractérisée en ce que** l'application cadre est conçue pour traiter les informations sur les fonctionnalités supplémentaires selon au moins l'une des possibilités suivantes :
représentation des informations au moins partiellement sur une interface utilisateur graphique, stockage des informations au moins partiellement dans une structure de données au sein de l'application cadre, téléchargement des informations au moins partiellement vers un cloud.

4. Application cadre selon l'une des revendications 1 à 3, **caractérisée par** au moins l'un des éléments suivants :
l'application cadre comprend au moins un composant de conteneur pour l'intégration de pilotes, un pilote pouvant être installé dans un composant de conteneur pour accéder à un composant de bus de terrain associé ;
entre un composant de conteneur et un pilote installé dans le composant de conteneur, il est prévu à chaque fois une interface standard par l'intermédiaire de laquelle des données peuvent être échangées entre le composant de conteneur et le pilote ;
entre le composant de conteneur et le pilote installé dans le composant de conteneur, il est prévu, en outre, respectivement au moins une interface propriétaire par l'intermédiaire de laquelle des données peuvent être échangées entre le composant de conteneur et le pilote.

5. Application cadre selon l'une des revendications 1 à 4, **caractérisée en ce qu'**une structure de données associée est prévue dans l'application cadre pour chaque composant de bus de terrain du réseau de bus de terrain, structure de données dans laquelle peuvent être stockées des informations sur des fonctionnalités supplémentaires prises en charge par le composant de bus de terrain ou le pilote associé.

6. Application cadre selon l'une des revendications 1 à 5, **caractérisée en ce que** sont prévues des structures de données affectées à un composant de conteneur de l'application cadre du composant de conteneur ou appartenant au composant de conteneur, lesquelles structures de données sont conçues pour stocker des informations sur des fonctionnalités supplémentaires du pilote installé dans le composant de conteneur et du composant de bus de terrain associé.

7. Application cadre selon l'une des revendications 1 à 6, **caractérisée en ce que** des informations sur l'état d'activation des fonctionnalités supplémentaires peuvent être transmises d'un pilote à l'application cadre par l'intermédiaire d'au moins l'une des interfaces propriétaires, et/ou **en ce que** des spécifications d'appareil du composant de bus de terrain respectif peuvent être transmises du pilote à l'application cadre par l'intermédiaire de l'interface standard.

8. Application cadre selon l'une des revendications 1 à 7, **caractérisée en ce que** l'application cadre comprend un composant central conçu pour lire et rassembler des informations sur des fonctionnalités supplémentaires.

9. Application cadre selon l'une des revendications 1 à 8, **caractérisée par** au moins l'un des éléments suivants :
l'application cadre est conçue pour rassembler des informations sur les fonctionnalités supplémentaires et les représenter dans une vue d'ensemble du réseau de bus de terrain sur une interface utilisateur graphique ;
des informations sur l'état d'activation des fonctionnalités supplémentaires peuvent être transmises d'un pilote à l'application cadre par l'intermédiaire d'au moins l'une des interfaces propriétaires, l'application cadre étant conçue pour afficher des informations sur les fonctionnalités supplémentaires prises en charge par les composants de bus de terrain, ainsi que l'état d'activation de ces fonctionnalités supplémentaires ;
l'application cadre est conçue pour représenter les fonctionnalités supplémentaires prises en charge par les composants de bus de terrain, ainsi que l'état d'activation desdites fonctionnalités, sous la forme d'une représentation matricielle sur une interface utilisateur graphique ;
l'application cadre est conçue pour télécharger vers un cloud des informations sur les fonctionnalités supplémentaires prises en charge par les composants de bus de terrain.

10. Application cadre selon l'une des revendications 1 à 9, **caractérisée par** l'un quelconque des éléments suivants :
l'application cadre est conçue pour générer une commande d'activation,
transmettre à un composant de bus de terrain, par l'intermédiaire de l'une des interfaces propriétaires, la commande d'activation ainsi qu'un pilote intégré dans l'application cadre, et activer au moins une fonctionnalité supplémentaire prise en charge par le composant de bus de terrain ;
l'application cadre est conçue pour recevoir une commande d'activation à partir d'un cloud, pour transmettre à un composant de bus de terrain, par l'intermédiaire de l'une des interfaces propriétaires, la commande d'activation ainsi qu'un pilote intégré dans l'application cadre, et pour activer au moins une fonctionnalité supplémentaire prise en charge par le composant de bus de terrain.

11. Application cadre selon l'une des revendications 1 à 10, **caractérisée en ce que** l'au moins une interface propriétaire comprend une méta-interface qui fournit à l'application cadre des informations sur le nombre et la conception des autres interfaces propriétaires.

12. Application cadre selon l'une des revendications 1 à 11, **caractérisée par** l'un quelconque des éléments suivants :
les informations sur l'étendue fonctionnelle de l'application cadre peuvent être transmises de l'application cadre à un pilote par l'intermédiaire d'au moins l'une des interfaces propriétaires ;
l'application cadre est conçue pour effectuer une comparaison des fonctionnalités entre l'application cadre, les pilotes et les composants de bus de terrain par l'intermédiaire de l'une ou plusieurs des interfaces propriétaires.

13. Application cadre selon l'une des revendications 1 à 12, **caractérisée par** l'un quelconque des éléments suivants :
l'application cadre est une application cadre FDT ;
l'interface standard est une interface standard FDT ;
les pilotes sont des DTM (Device Type Manager) ;
dans le réseau de bus de terrain, au moins l'une des normes de bus de terrain suivantes est utilisée : Profibus, Foundation Fieldbus, HART, Industrial Ethernet ;
les pilotes sont conformes à au moins une des normes suivantes : DD, EDD, EDS, DTM, FDI Device Packages ;
le composant de bus de terrain respectif est un appareil de terrain, un appareil passerelle ou un appareil d'accès.

14. Logiciel d'accès aux appareils, lequel logiciel comporte une application cadre selon l'une des revendications 1 à 13 et au moins un pilote intégré dans l'application cadre et destiné à accéder à un composant de bus de terrain associé.

15. Procédé destiné à l'obtention d'informations sur des fonctionnalités supplémentaires de composants de bus de terrain (101, 103, 104, 106, 107) d'un réseau de bus de terrain (100) ou de leurs pilotes (111, 113, 115, 117, 118, 201) à partir d'une application cadre (501),
l'application cadre (501) étant installée, conjointement avec au moins un pilote (111, 113, 115, 117, 118, 201) intégré dans l'application cadre, sur un hôte (108) qui est en liaison de données avec un réseau de bus de terrain (100),
l'au moins un pilote (111, 113, 115, 117, 118, 201) étant conçu pour accéder à un composant de bus de terrain associé (101, 103, 104, 106, 107) du réseau de bus de terrain (100),
l'application cadre (501) comportant une interface standard (202) pour chaque pilote intégré (111, 113, 115, 117, 118, 201), par l'intermédiaire de laquelle un échange de données a lieu entre le pilote et l'application cadre,
et le procédé comprenant les étapes suivantes :
Demande d'informations sur des fonctionnalités supplémentaires d'un composant de bus de terrain (101, 103, 104, 106, 107) ou de son pilote (111, 113, 115, 117, 118, 201) à l'application cadre (501),
Transmission des informations sur des fonctionnalités supplémentaires du composant de bus de terrain (101, 103, 104, 106, 107) ou de son pilote (111, 113, 115, 117, 118, 201) du pilote du composant de bus de terrain (101, 103, 104, 106, 107) à l'application cadre (501) par l'intermédiaire d'au moins une interface propriétaire (203, 204) qui est prévue, en plus de l'interface standard (202), entre le pilote et l'application cadre (501), les fonctionnalités supplémentaires comprenant au moins l'un des éléments suivants :
une fonctionnalité supplémentaire relative à un niveau spécifique d'intégrité de sécurité du composant de bus de terrain ;
une fonctionnalité supplémentaire permettant d'effectuer des tests fonctionnels de l'appareil ;
une fonctionnalité supplémentaire permettant d'imprimer, au moyen d'un clic, la documentation relative au composant de bus de terrain correspondant ;
une fonctionnalité supplémentaire permettant d'évaluer les signaux de mesure pour la mesure du temps de transit au moyen d'une courbe d'enveloppe ; une fonctionnalité supplémentaire relative à la connectivité à un cloud ;
une fonctionnalité supplémentaire concernant une version linguistique traduite en natif pour le guidage de l'utilisateur.
